# DEMANDE DE BREVET EUROPEEN

(11) **EP 3 251 954 A1**
(43) Date de publication de la demande: **06.12.2017**
(21) Numéro de dépôt: 17173526.9
(22) Date de dépôt: 30.05.2017
(51) Int. Cl.: B64C 39/02, B63G 8/39, B64D 3/02

(54) **SYSTEME ET PROCEDE DE COMMUNICATION HYBRIDE AVEC UN DRONE SOUS-MARIN**

(30) Priorité: 02.06.2016 FR 1654997
(71) Demandeur: ECA Robotics, 83130 La Garde (FR)
(72) Inventeur: PINTO, Marc, 83400 HYERES (FR)
(74) Mandataire: Santarelli

(57) **Abrégé**

L'invention concerne un système de communication (1) sous-marine haut débit comprenant une plateforme aérienne (3) comprenant au moins une interface de communication, un dispositif (5) porté par la plateforme aérienne (3), comprenant un sonar de communication configuré pour établir, après immersion du dispositif, une communication sous-marine avec un engin sous-marin (2), et une interface de communication pour établir un lien de communication avec la plateforme aérienne au moyen de son première interface de communication. Le système est configuré pour permettre la réception de premières données depuis une première base opérationnelle et la transmission des premières données à l'engin sous-marin, et/ou la réception de secondes données depuis l'engin sous-marin et la transmission des secondes données à une seconde base opérationnelle.

## Description

La présente invention concerne un système de communication sous-marine et un procédé de communication mis en oeuvre par un tel système, notamment pour permettre l'établissement d'une communication hybride de données entre un drone sous-marin immergé et un dispositif distant non-immergé.

Des véhicules ou « drones » sous-marins, avec ou sans pilote, sont communément employés pour effectuer des missions de reconnaissance et de surveillance du fond. Pour une endurance typique de vingt heures avec une vitesse de l'ordre de trois noeuds par heure et une couverture de l'ordre de 2 km² par heure, chaque drone sous-marin peut couvrir une zone d'environ 40 km² par mission. Une flottille de drones peut être employée simultanément pour augmenter la zone couverte.

En général, il n'est pas nécessaire de transmettre en temps réel les données brutes, c'est-à-dire des données non traitées issues des capteurs, vers une station distante, aussi appelée « base opérationnelle ». Cependant, il peut néanmoins exister un besoin opérationnel pour la transmission périodique d'échantillons représentatifs de données captées pour commencer leur analyse avant la fin de la mission, pour vérifier le bon fonctionnement du drone sous-marin, et/ou pour corriger sa trajectoire. Dans certaines circonstances, il peut même être souhaitable d'établir un lien de communication haut débit entre le ou les drones sous-marins et une ou plusieurs base opérationnelles pour interpréter les données mesurées et, le cas échéant, adapter leur mission.

Cependant, les moyens actuels de communications sous-marines ont des performances très limitées, voire aléatoires, sur de grandes portées, en particulier de grandes distances horizontales, notamment par petits fonds. Il faut donc s'attendre à des débits très faibles, de l'ordre de quelques dizaines de bits par seconde, qui ne permettent généralement pas la transmission suffisamment rapide de données et/ou de commandes. En outre, lorsqu'une flottille de drones sous-marins est répartie sur une grande zone, qui peut elle-même être très éloignée d'une base opérationnelle, par exemple de plus de 100 km, les communications avec l'ensemble des drones sous-marins est encore plus difficile.

Il existe notamment des solutions de communications électromagnétiques à très basse fréquence (« *Very Low Frequency »* ou VLF en anglais) ou à extrêmement basse fréquence (*« Extremely Low Frequency »* ou ELF en anglais) permettant de communiquer avec des sous-marins. Cependant, ce sont des systèmes très complexes et à très faible débit.

Il existe également des lasers de communications sous-marines mais leur portée en eau turbide est très limitée (de quelques mètres à quelques dizaines de mètres).

Il existe aussi des systèmes de communications sous-marines de type « SONAR » (acronyme de « *SOund Navigation And Ranging »* en anglais) utilisant la transmission d'une onde acoustique. Cependant, si ces systèmes permettent une communication sous l'eau sur des distances pouvant aller jusqu'à plusieurs dizaine de kilomètres, ces systèmes ne sont pas adaptés à l'établissement de communications entre un drone sous-marin et une base opérationnelle non immergée à cause de la différence d'impédance acoustique entre l'eau et l'atmosphère.

Ainsi, pour optimiser les transmissions, le récepteur du sonar doit aussi être immergé. De tels sonars de communication opèrent dans une large gamme de fréquences permettant de nombreux compromis entre la bande passante et la portée (une fréquence plus élevée permet d'augmenter la bande passante et donc le débit, au prix de la portée). Par contre, un tel récepteur doit être embarqué sur un navire dédié à la communication avec un drone sous-marine spécifique, avec un coût humain et matériel supplémentaire par exemple.

Il existe donc un besoin pour un système qui permettrait une communication facile et rapide entre une station distante et au moins un drone sous-marin.

Des modes de réalisation de l'invention concernent un système de communication sous-marine haut débit comprenant :
- une plateforme aérienne comprenant au moins une interface de communication,
- un dispositif porté par la plateforme aérienne, comprenant un sonar de communication configuré pour établir, après immersion du dispositif, une communication sous-marine avec un engin sous-marin, et une interface de communication pour établir un lien de communication avec la plateforme aérienne au moyen de son première interface de communication,
le système étant configuré pour permettre :
- la réception de premières données depuis une première base opérationnelle et la transmission des premières données à l'engin sous-marin, et/ou
- la réception de secondes données depuis l'engin sous-marin et la transmission des secondes données à une seconde base opérationnelle.

Le système selon l'invention permet une communication entre un engin sous-marin (par exemple un drone sous-marin sans pilote) et une ou plusieurs bases opérationnelles (par exemple un navire), via une plateforme aérienne (par exemple un drone aérien), au moyen d'un sonar porté par la plateforme aérienne et « trempé » ou « immergé » de façon continue ou périodique à une position estimée du drone sous-marin. Un tel système présente de nombreux avantages, notamment en termes de facilité et de rapidité de mise en oeuvre, d'encombrement et de coûts.

Dans un mode de réalisation, la plateforme aérienne comprend au moins une autre interface de communication pour transmettre les secondes données à la seconde base opérationnelle et/ou pour recevoir les premières données de la première base opérationnelle.

Cette interface de communication, utilisant par exemple une voie aérienne ou satellitaire, permet à la plateforme aérienne d'échanger des données avec la ou les bases opérationnelles pendant une mission, sans nécessiter de retour à la base.

Dans un mode de réalisation, la plateforme aérienne est un drone aérien sans pilote.

Un drone aérien sans pilote est en général plus léger et peut être plus maniable.

Dans un mode de réalisation, la plateforme aérienne comprend la première base opérationnelle et/ou la seconde base opérationnelle.

Dans ce mode de réalisation, la plateforme aérienne est autonome (en ce qui concerne sa mission) et n'a pas besoin d'envoyer des commandes à un tiers et/ou d'en recevoir.

Dans un mode de réalisation, la plateforme aérienne comprend un treuil pour permettre l'immersion et/ou la récupération du dispositif porté par la plateforme aérienne.

Outre la facilité de mise en oeuvre, un treuil apporte plus de stabilité et de tenu mécanique au dispositif sonar.

Dans un mode de réalisation, la plateforme aérienne ou le dispositif porté par la plateforme aérienne est configuré pour détecter la présence de l'engin sous-marin.

Dans un mode de réalisation, la plateforme aérienne est mobile et peut se déplacer à la vitesse de l'engin sous-marin, dans la même direction horizontale.

Ce mode de réalisation permet notamment la communication entre la plateforme aérienne et l'engin sous-marin, sans que l'engin sous-marin n'ait à interrompre sa mission ou changer sa route.

Dans un mode de réalisation, la zone de communication est un cône de quelques degrés autour de la verticale du sonar.

Ce mode de réalisation permet, en particulier, une communication fiable entre le dispositif sonar et l'engin sous-marin.

Dans un mode de réalisation, le système comprend une pluralité d'engins sous-marins et la plateforme aérienne est configurée pour communiquer séquentiellement avec chaque engin sous-marin.

Une flottille d'engins sous-marins est alors déployée afin d'augmenter la zone couverte et/ou réduire le temps de déploiement et/ou de mission.

Des modes de réalisation de l'invention concernent en outre un procédé de communication sous-marin mis en oeuvre par un système de communication selon l'invention, le procédé comprenant les étapes de:
- détermination de la présence ou l'absence d'un engin sous-marin dans une zone de communication du dispositif porté par la plateforme aérienne et immergé,
- si un engin sous-marin se trouve dans la zone de communication du dispositif porté par la plateforme aérienne, établissement d'un lien de communication entre la plateforme aérienne et l'engin sous-marin au moyen du dispositif porté par la plateforme aérienne,
- si aucun engin sous-marin ne se trouve dans la zone de communication du dispositif porté par la plateforme aérienne, ordonner le déplacement du dispositif porté par la plateforme aérienne.

Le procédé de communication selon l'invention permet d'établir une communication entre la plateforme aérienne et un engin sous-marin, dont la position peut dériver au cours de sa mission.

Dans un mode de réalisation, le dispositif de communication est immergé à une position estimée de l'engin sous-marin.

Dans un mode de réalisation, le procédé comprend en outre une étape de détermination d'au moins un autre engin sous-marin avec lequel un lien de communication doit être établi et la répétition des étapes de détermination de la présence ou l'absence d'un engin sous-marin dans une zone de communication du dispositif porté par la plateforme aérienne et d'établissement d'un lien de communication entre la plateforme aérienne et l'engin sous-marin au moyen du dispositif porté par la plateforme aérienne.

Ce mode de réalisation permet à la plateforme aérienne de communiquer avec une flottille d'engins sous-marins déployés.

Dans un mode de réalisation, le procédé comprend en outre une étape de communication avec une base opérationnelle, avant et/ou après l'établissement du lien de communication.

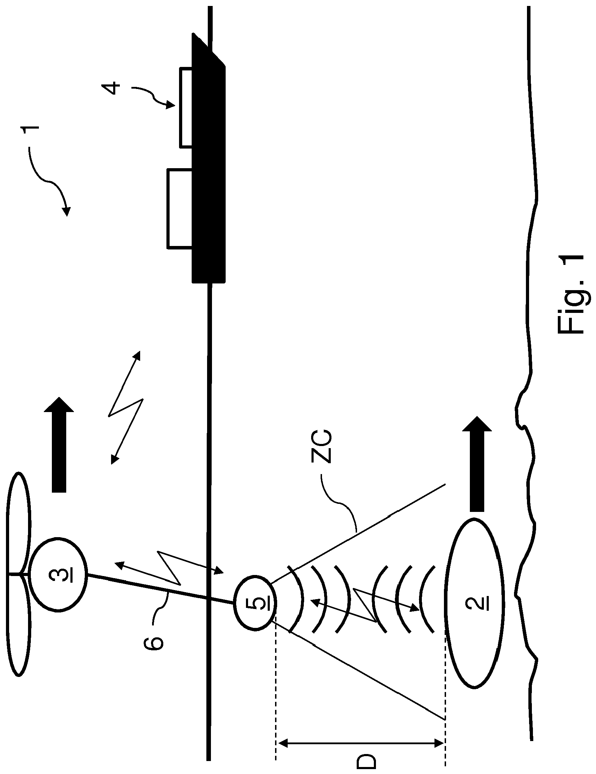

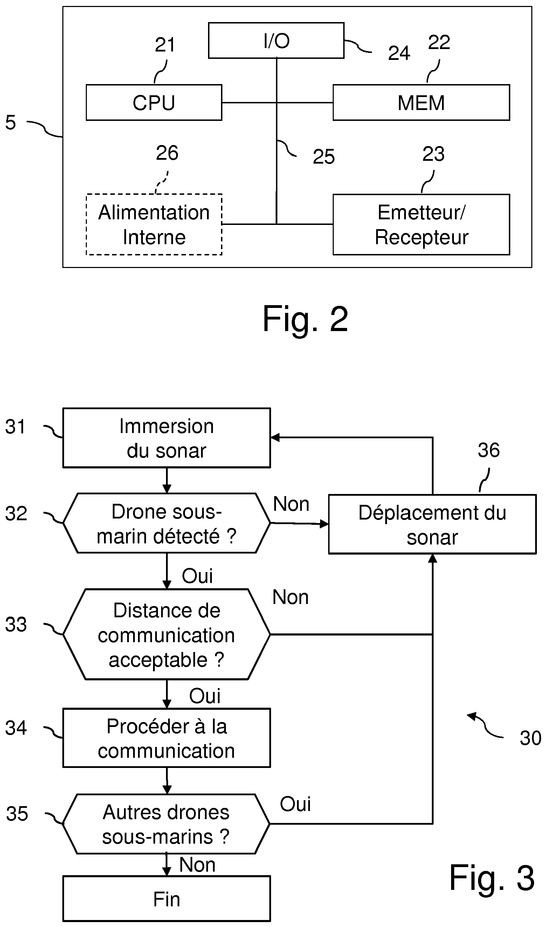

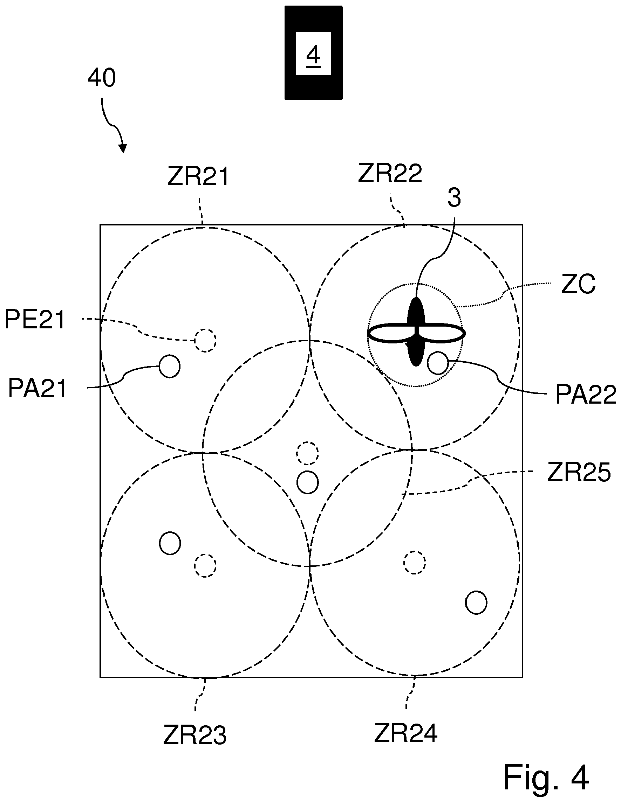

D'autres avantages, buts et caractéristiques de la présente invention ressortent de la description détaillée qui suit, faite à titre d'exemple non limitatif, au regard des dessins annexés dans lesquels :
- **la** **figure 1** représente un système de communication selon un mode de réalisation particulier de l'invention,
- **la** **figure 2** représente schématiquement un sonar pouvant faire partie d'un système de communication selon l'invention, par exemple celui-illustré sur la figure 1,
- **la** **figure 3** est un organigramme de certaines étapes d'un procédé de communication d'un système de communication selon un mode de réalisation particulier de l'invention, et
- **la** **figure 4** illustre la mise en oeuvre d'une pluralité de drones sous-marins.

D'une manière générale, un but de l'invention est de permettre la communication entre un engin sous-marin (un drone sous-marin sans pilote ou un sous-marin piloté, ci-après référencé « drone sous-marin » pour des raisons de simplicité) et une station distante (une « base opérationnelle »), via une plateforme aérienne (par exemple un drone aérien), au moyen d'un sonar porté par la plateforme aérienne et « trempé » ou « immergé » de façon continue ou périodique à une position estimée du drone sous-marin.

Selon un mode de réalisation particulier, la plateforme aérienne est un drone aérien sans pilote à voilure tournante, qui peut se maintenir à la verticale du drone sous-marin, se déplaçant à la même vitesse, typiquement une vitesse de l'ordre de trois noeuds.

Les communications sous-marines entre le drone sous-marin et le sonar s'effectuent donc dans d'excellentes conditions, la distance de communication sous-marine étant minimisée autant que possible, typiquement de quelques dizaines de mètres seulement par petits fonds. A des portées aussi faibles, de hauts débits de communication peuvent être obtenus, par exemple des débits de l'ordre de 100 kbit/s à plusieurs Mbit/s, avec des systèmes acoustiques haute fréquence, ce qui permet le transfert de données et de commandes.

La figure 1 représente un système de communication 1 comprenant ici un drone sous-marin 2, un drone aérien 3, et une base opérationnelle 4, par exemple un navire. (Alternativement ou de façon complémentaire, la base opérationnelle peut être une base terrienne ou le drone aérien 3 lui-même.)

Le drone aérien 3 porte un sonar de communication sous-marine 5, relié au drone aérien 3 par un câble de transmission 6 de données entre le sonar 5 et le drone aérien 3 et, de préférence, un câble d'alimentation électrique du sonar 5 et/ou un câble spécifique de portage pour soutenir mécaniquement le sonar. Le sonar 5 a une zone de communication ZC, généralement un cône avec un angle de quelques degrés autour de la verticale. Le drone aérien 3 comprend en outre, dans ce mode de réalisation, au moins une première interface de communication sous-marine avec le sonar de communication et une seconde interface de communication aérienne ou satellitaire avec la base opérationnelle 4.

Selon un mode de réalisation particulier, le drone aérien 3 comporte en outre un treuil afin de monter et descendre le sonar 5. Il peut aussi comporter des moyens de vérification, par exemple basé sur un système de reconnaissance vidéo ou des détecteurs, pour vérifier que la surface de l'eau est dégagée de tout navire ou obstacle de surface pouvant mettre en péril la partie du système de communication comprenant le sonar et le drone aérien.

Comme illustré à l'aide de flèches horizontales, pour établir et maintenir un lien de communication entre le sonar 5 et le drone sous-marin 2, le drone aérien 3 se déplace sensiblement à la même vitesse et dans la même direction (dans un plan horizontal) que le drone sous-marin 2 de telle sorte que le sonar 5 soit approximativement à la verticale du drone sous-marin 2 au moins le temps de la communication entre eux.

Les doubles-flèches illustrent l'échange de données entre le drone sous-marin 2 et le sonar 5, entre le sonar 5 et le drone aérien 3 et entre le drone aérien 3 et la base opérationnelle 4.

La figure 2 représente schématiquement une partie de l'architecture logique du sonar 5. Les éléments formant cette architecture peuvent être intégrés par exemple sur un circuit imprimé (une carte de type « *Printed Circuit Board »* ou PCB en anglais) ou des composants distincts.

Comme illustré, le sonar 5 comprend ici un processeur 21 (aussi appelé « *Central Processing Unit* » ou CPU en anglais), une mémoire 22 (par exemple de type *« Read Only Memory »* ou ROM en anglais, de type *« Random Access Memory* » ou RAM, une mémoire FLASH, un autre type de mémoire ou une combinaison de plusieurs types de mémoire), une interface de communication acoustique 23 comprenant un récepteur et un émetteur et une interface d'entrée/sortie 24 (aussi appelée « *Input*/*Output interface* » ou I/O en anglais). Cette dernière permet l'échange de données entre le drone aérien 3 au moyen de la première interface de communication de celui-ci et le sonar 5. L'interface de communication acoustique 23 permet un échange de données haut débit entre le sonar 5 et un drone sous-marin tel que le drone sous-marin 2. Les échanges de données entre le drone aérien 3 et le sonar 5 peuvent être basés sur des protocoles de communication standards, par exemple Ethernet.

Comme illustré, les différents éléments représentés sont interconnectés par un bus informatique 25.

La mémoire 22 peut stocker un ou plusieurs programmes mis en oeuvre par le sonar ainsi que des données reçues de la part du drone sous-marin 2 ou à destination de celui-ci. Le sonar 5 peut aussi comporter une alimentation interne 26, par exemple une batterie pour garantir plus d'autonomie.

L'interface de communication acoustique 23 est configurée pour opérer à des fréquences élevées afin de permettre un échange de données à haut débit. Cependant, la distance entre le sonar et le drone sous-marin étant faible, conformément à certains modes de réalisation, l'énergie requise pour ces échanges n'a pas besoin d'être élevée (en d'autres termes la consommation électrique est basse) et, par conséquent, le poids du sonar peut être relativement faible. Par exemple, le sonar peut avoir un poids d'environ 1,5 kg, un débit de communication d'environ 60 kbits par seconde et une portée de 300 m. Lorsque l'interface de communication acoustique 23 est immergée, l'énergie reçue et ainsi le débit de transfert de données est maximisé.

Il est observé ici que la position du drone aérien 3 est généralement connue à tout instant avec une très grande précision (par exemple à l'aide d'un système mondial de positionnement - « *Global Positioning System »* ou GPS en anglais et/ou par triangulation) tandis que la position du drone sous-marin 2, basé sur une estime utilisant par exemple un système de navigation inertielle, peut dériver avec le temps. La précision de la position du drone sous-marin n'est généralement pas supérieure à quelques dizaines de mètres. La position du drone sous-marin doit donc être recalée de manière périodique.

L'emploi du sonar 5 immergé permet d'effectuer un tel recalage en position en fonction de la position du sonar qui peut être déterminée selon celle du drone aérien, par exemple en utilisant une méthode de localisation acoustique connue dite de base ultracourte ou de base ultracourte inversée.

La figure 3 est un organigramme illustrant certaines étapes d'un procédé de communication 30 entre un drone aérien et un drone sous-marin au moyen d'un sonar immergé. Le procédé comprend les étapes 31 à 36.

Au cours de l'étape 31, le drone aérien 3 immerge, typiquement à quelque mètre sous le niveau de l'eau, le sonar 5 à un point d'immersion qui est de préférence prédéterminé, par exemple une position estimée du drone sous-marin 5 ou une première position de repérage.

A l'étape 32, il est vérifié si le drone sous-marin 2 est détecté. Cette vérification peut être effectuée par la base opérationnelle 4, le drone aérien 3 ou le sonar 5. Une telle détection peut être effectuée de différente façon, par exemple en essayant d'établir un lien de communication entre le sonar 5 et le drone sous-marin 2. Si le drone sous-marin est détecté, à l'étape 33, il est vérifié si le sous-marin 2 est dans une zone de communication du sonar 5, par exemple directement en-dessous du sonar 5 ou dans un cône de quelques degrés. A nouveau cette vérification peut être effectuée par la base opérationnelle 4, le drone aérien 3 ou le sonar 5.

Si le sous-marin 2 est dans une zone de communication du sonar 5, un lien de communication entre le sonar 5 et le drone sous-marin 2 est établi. A l'étape 34, des données sont échangées entre le drone sous-marin 2 et le sonar 5, le drone aérien 3 ou une base opérationnelle 4, comme il sera décrit plus tard. Les données transmises peuvent notamment comprendre des données stockées dans le drone sous-marin (par exemples des imagettes de détections sonar pouvant correspondre à des mines devant être analysées par un opérateur). Elles peuvent également comprendre des commandes devant être transmises au drone sous-marin 2, ou une combinaison des deux.

A l'étape 35, le procédé détermine si un lien de communication doit être établi avec d'autres drones sous-marins, par exemple dans le cadre d'une flottille de drones sous-marins. A titre d'illustration, cette détermination peut être basée sur la comparaison des identifiants d'une flottille de drones sous-marins avec des identifiants de drones sous-marins avec lesquels des liens de communication ont déjà été établis.

Si un lien de communication doit être établi avec au moins un autre drone sous-marin, le drone aérien 3 se déplace, afin de déplacer le sonar 5, à l'étape 36. Les étapes précédentes (étapes 31 à 35) sont alors répétées.

Au contraire, si aucun nouveau lien de communication ne doit être établi avec un autre drone sous-marin, le procédé de communication se termine. Le drone aérien 3 peut alors, par exemple, retourner à la base opérationnelle 4. Le drone aérien 3 peut commencer un traitement des données reçues du drone sous-marin 2 ou les transmettre à la base opérationnelle 4 dès leur réception. Alternativement ou de façon complémentaire, les données reçues du drone sous-marin 2 peuvent être traitées par la base opérationnelle 4 après le retour du drone aérien 3.

Si, au contraire, le drone sous-marin 2 n'est pas détecté à l'étape 32 ou si le drone sous-marin 2 n'est pas dans une zone de communication du sonar 5 à l'étape 33, le drone aérien 3 se déplace à l'étape 36, afin de déplacer le sonar 5, sans que le drone sous-marin 2 n'ait à interrompre sa mission ou changer sa route. Le déplacement du drone aérien 3 peut s'effectuer après avoir remonté le sonar 5 ou avec le sonar 5 toujours immergé, selon les conditions métrologiques et les spécifications du système (en particulier la tenue mécanique, la sensibilité du sonar, la distance à parcourir et/ou le ralentit du sonar déployé). La position à laquelle est déplacé le drone aérien 3 peut-être prédéterminée ou calculée dynamiquement par le drone aérien 3 ou la base opérationnelle 4.

Le sonar 5 peut avoir une zone de détection du drone sous-marin plus large que la zone de communication, par exemple basée sur l'utilisation d'un sonar moins puissant, afin de déterminer, dans un premier temps, si la position estimée du drone sous-marin est correcte. Ceci peut être avantageux si le drone sous-marin est susceptible de dériver plus que prévu.

L'échange de données entre les différentes entités du système (le drone sous-marin 2, le drone aérien 3, la base opérationnelle 4 et le sonar 5) peut se dérouler de différentes manières.

Il sera noté qu'il peut y avoir une pluralité de bases opérationnelles 4, par exemple une première base pour envoyer des commandes et des ordres de mission aux drones sous-marins et une deuxième base pour recevoir et traiter des données reçues des drones sous-marins.

Toujours à titre d'exemple, les données à envoyer au drone sous-marin peuvent être des premières données envoyées par transmission satellite d'une première base opérationnelle au drone aérien 3 et ensuite transmises au drone sous-marin 2 au moyen du sonar 5. Ensuite, des secondes données reçues du drone sous-marin 2 au moyen du sonar 5 peuvent être envoyées par transmission satellite du drone aérien 3 à une seconde base opérationnelle qui les traite.

Alternativement, les données à envoyer au drone sous-marin 2 sont communiquées (de façon filaire ou non-filaire) au drone aérien 3 avant son décollage et/ou les données reçues du drone sous-marin 2 sont communiquées du drone aérien 3 après son atterrissage.

La communication entre les différentes entités est alors considérée comme « hybride » car différents moyens de communication sont employés pour échanger les données entre elles - par sonar entre le ou les drones sous-marins et le sonar, par liaison filaire entre le sonar et le drone aérien et par satellite ou tout autre moyen entre le drone aérien et une base opérationnelle.

Le déplacement du drone aérien peut être asservi sur le déplacement du drone sous-marin en détectant et/ou en estimant sa position en temps réel

La figure 4 illustre la mise en oeuvre 40 d'une pluralité de drones sous-marins 2i (i étant un index de drone, par exemple 21, 22, 23, 24 et 25), avec une base opérationnelle 4.

Une zone de recherche ZR2i (ZR21, ZR22, ZR23, ZR24 et ZR25 respectivement) est associée à chaque drone sous-marin, ainsi qu'une position estimée PE2i (PE21, PE22, PE23, PE24 et PE25 respectivement) ainsi qu'une position actuelle PA2i (PA21, PA22, PA23, PA24 et PA25 respectivement). Seules les positions PE21 et PA21 sont représentées pour des raisons de clarté.

Le drone aérien 3 immerge le sonar 5 à la position estimée PE2i du drone sous-marin 2i, par exemple la position estimée PE22 du drone sous-marin ayant l'index 2. Une zone de communication ZC est formée autour du point d'immersion du sonar.

Comme illustré en relation avec la zone de recherche ZR22, une zone de communication ZC est formée autour du point d'immersion du sonar correspondant à la position estimée du drone sous-marin ayant l'index 2. Si la position actuelle PA22 de ce drone sous-marin se trouve dans la zone de communication (comme illustré pour la zone ZR22), le drone aérien 3 n'a pas besoin de déplacer le sonar avant de commencer la communication.

Si, au contraire, la position actuelle PA du drone sous-marin ne figure pas dans la zone de communication ZC, le sonar 5 doit être déplacé afin de pouvoir communiquer avec le drone sous-marin. Il est ainsi possible que le sonar 5 soit immergé à plusieurs emplacements avant de détecter le drone sous-marin avec lequel une communication doit être établie. La position à laquelle le sonar 5 doit être immergé peut être estimée selon des paramètres tels que les courants d'eau, le vent et la vitesse du drone sous-marin, en faisant varier ses paramètres.

Lorsqu'une communication est terminée, le drone aérien 3 peut retourner à la base opérationnelle 4 pour se réapprovisionner (par exemple charger ses batteries, les changer ou faire le plein de ses réserves de carburant), pour transmettre les données reçues du drone sous-marin ou pour échanger des pilotes. Au contraire, il peut poursuivre sa mission et établir un lien de communication avec un autre drone sous-marin. Lorsque toutes les communications ont été effectuées, le drone aérien peut ré-établir un lien de communication avec des drones sous-marins ou retourner à la base opérationnelle.

Dans des modes de réalisation particuliers, le sonar 5 est utilisé pour communiquer avec un ou plusieurs types particuliers de plateformes sous-marines incluant les véhicules habités, les planeurs, les bouées à immersion variable et les stations fixes au fond de la mer.

En d'autres termes, l'expression « drone sous-marin » ne devrait pas alors être interprétée de façon limitative.

En outre, la première et/ou la seconde base opérationnelle peuvent être intégrées dans la plateforme aérienne. Dans ce cas, une base opérationnelle distincte peut ne pas être nécessaire. La plateforme aérienne 3 peut être autonome et comprendre des moyens nécessaires au stockage de données et à leur traitement, avec une autonomie de distance suffisante pour communiquer avec le ou les sous-marins.

De même, bien que la plateforme aérienne 3 ait été décrite comme étant de préférence à voilure tournante, sans pilote à bord, qui peut se maintenir en place le temps de la communication avec le drone sous-marin, l'emploi d'un hélicoptère ou même d'un avion peut être envisagé dans le cadre de l'invention.

Dans un mode de réalisation, le drone aérien peut mettre à l'eau un dispositif qui flotte sur la surface de l'eau. Ce dernier comprend le sonar de communication sous-marine ainsi que, de préférence, des moyens permettant d'immerger ce sonar de l'ordre de quelques mètres, à l'instar des bouées sonar utilisées pour la détection sous-marine.

Dans un autre mode de réalisation, la bouée sonar est lâchée par le drone aérien. Elle est alors autonome en énergie et communique avec le drone aérien par une liaison radio. Dans ce cas la bouée est également munie d'un dispositif permettant sa récupération par le drone aérien.

Dans le cadre d'une flottille de drones sous-marins, l'utilisation d'un drone aérien permet la communication séquentielle avec une partie ou tous les membres de la flottille assez rapidement car le drone aérien peut se déplacer très rapidement par rapport à un véhicule de surface ou sous-marin. Un tel moyen de communication est donc beaucoup plus efficace qu'un réseau étendu de communication sous-marine qui ne permettrait qu'un débit très faible ou nécessiterait un nombre irréaliste de répéteurs sous-marins qui seraient nécessaire pour maintenir un débit de communication élevé.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées.

Dans les revendications, les termes « comprendre » ou « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Système de communication (1) sous-marine haut débit comprenant :
- une plateforme aérienne (3) comprenant au moins une interface de communication,
- un dispositif (5) porté par la plateforme aérienne (3), comprenant un sonar de communication configuré pour établir, après immersion du dispositif, une communication sous-marine avec un engin sous-marin (2), et une interface de communication pour établir un lien de communication avec la plateforme aérienne au moyen de son première interface de communication,
le système étant configuré pour permettre :
- la réception de premières données depuis une première base opérationnelle et la transmission des premières données à l'engin sous-marin, et/ou
- la réception de secondes données depuis l'engin sous-marin et la transmission des secondes données à une seconde base opérationnelle.

2. Système selon la revendication 1, selon lequel la plateforme aérienne (3) comprend au moins une autre interface de communication pour transmettre les secondes données à la seconde base opérationnelle et/ou pour recevoir les premières données de la première base opérationnelle.

3. Système selon l'une quelconque des revendications 1 ou 2, dans lequel la plateforme aérienne (3) est un drone aérien sans pilote.

4. Système selon l'une quelconque des revendications 1 à 3, selon lequel la plateforme aérienne (3) comprend la première base opérationnelle et/ou la seconde base opérationnelle.

5. Système selon l'une quelconque des revendications 1 à 4, dans lequel la plateforme aérienne (3) comprend un treuil pour permettre l'immersion et/ou la récupération du dispositif (5) porté par la plateforme aérienne.

6. Système selon l'une quelconque des revendications 1 à 5, dans lequel la plateforme aérienne (3) ou le dispositif (5) porté par la plateforme aérienne est configuré pour détecter la présence de l'engin sous-marin (2).

7. Système selon l'une quelconque des revendications 1 à 6, dans lequel la plateforme aérienne (3) est mobile et peut se déplacer à la vitesse de l'engin sous-marin (2), dans la même direction horizontale.

8. Système selon l'une quelconque des revendications 1 à 7, dans lequel la zone de communication (ZC) est un cône de quelques degrés autour de la verticale du sonar.

9. Système selon l'une quelconque des revendications 1 à 8, comprenant une pluralité d'engins sous-marins (2 ; 21, 22, 23, 24, 25), et dans lequel la plateforme aérienne (3) est configurée pour communiquer séquentiellement avec chaque engin sous-marin.

10. Procédé de communication (30) sous-marin mis en oeuvre par un système de communication (1) selon l'une des revendications 1 à 9, comprenant les étapes de:
- détermination (32) de la présence ou l'absence d'un engin sous-marin dans une zone de communication (ZC) du dispositif (3) porté par la plateforme aérienne et immergé,
- si un engin sous-marin se trouve dans la zone de communication du dispositif (5) porté par la plateforme aérienne (3), établissement (34) d'un lien de communication entre la plateforme aérienne (3) et l'engin sous-marin (2) au moyen du dispositif (5) porté par la plateforme aérienne,
- si aucun engin sous-marin ne se trouve dans la zone de communication du dispositif porté par la plateforme aérienne, ordonner le déplacement (36) du dispositif (5) porté par la plateforme aérienne.

11. Procédé selon la revendication 10, dans lequel le dispositif de communication est immergé à une position estimée (PE) de l'engin sous-marin (2).

12. Procédé selon l'une quelconque des revendications 10 ou 11, comprenant en outre une étape de détermination (35) d'au moins un autre engin sous-marin avec lequel un lien de communication doit être établi, et la répétition des étapes de détermination de la présence ou l'absence d'un engin sous-marin dans une zone de communication du dispositif porté par la plateforme aérienne et d'établissement d'un lien de communication entre la plateforme aérienne (3) et l'engin sous-marin (2) au moyen du dispositif (5) porté par la plateforme aérienne.

13. Procédé selon l'une quelconque des revendications 10 à 12, comprenant en outre une étape de communication avec une base opérationnelle (4), avant et/ou après l'établissement (34) du lien de communication.
